# EUROPEAN PATENT APPLICATION

(11) **EP 3 711 930 A1**
(43) Date of publication of application: **23.09.2020**
(21) Application number: 18878468.0
(22) Date of filing: 17.10.2018
(51) Int. Cl.: B29C 65/16, B29C 65/18

(54) **WELDING METHOD AND WELDING DEVICE**

(30) Priority: 14.11.2017 JP 2017218757
(71) Applicant: Totani Corporation, Kyoto-shi Kyoto 601-8213 (JP)
(72) Inventor: IKUTA Kohki, Kyoto-shi Kyoto 601-8213 (JP); UEDA Toshinori, Kyoto-shi Kyoto 601-8213 (JP)
(74) Representative: Pfenning, Meinig & Partner mbB
(86) International application number: PCT/JP2018/038672
(87) International publication number: WO 2019/097942

(57) **Abstract**

A welding method heats a surface to be welded of a continuous strip member with a laser beam. The welding method pressurizes the strip member and a continuous film to weld the surface to the film, when or after heating the surface with the laser beam. The welding method preheats the surface before heating the surface with the laser beam. A welding device includes a heat device having an infrared light source disposed to extend along a feed path for the strip member. The heat device is configured to irradiate the surface with infrared light to heat the surface with infrared light. The welding device includes a pressure device configured to pressurize the strip member and the film to weld the surface to the film.

## Description

### TECHNICAL FIELD

The present invention relates to a method and a device for welding a surface of a continuous strip member such as a zipper to a continuous plastic film.

### BACKGROUND ART

A plastic bag including a zipper part and panel parts is well known. The plastic bag can be opened and closed with the zipper part. The zipper part is generally welded to the panel part which is made of a plastic film.

Methods for making such plastic bags are also well known. The patent documents 1 and 2 disclose a welding method for welding a zipper to a plastic film with a laser beam.

The welding method disclosed in each of these documents feeds a continuous zipper in the longitudinal direction of the zipper and also feeds a continuous plastic film in the longitudinal direction of the film. The welding method spot-irradiates a surface to be welded of the zipper with a laser beam to heat-melt the surface with the laser beam, while feeding the zipper.

After melting the surface, the welding method guides the zipper and the film through a pair of pressure rollers to superpose them on each other and to pressurize them with the pair of the pressure rollers. This pressurization causes the surface of the zipper to be welded to the film.

In the case of using the spot irradiation of the laser beam, the surface of the zipper is irradiated with the laser beam only while passing through the laser beam. Therefore, it is a matter of course that, when the zipper is fed at high speed, the surface of the zipper is irradiated with the laser beam only for a moment and can fail to be sufficiently heated. As a result, deficient welding can occur between the zipper and the film.

### CITATION LIST

### PATENT DOCUMENT

Patent Document 1: Japanese Unexamined Patent Application Publication No.2015-123644
Patent Document 2: Japanese Unexamined Patent Application Publication No. 2017-47622

### SUMMARY

### PROBLEM TO BE SOLVED BY THE INVENTION

A first aspect of the present invention provides a welding method capable of stably welding a surface of a continuous strip member such as a zipper to a continuous film, even when the strip member is fed at high speed. A second aspect of the present invention provides a welding device suitable for implementing the welding method.

### SOLUTION TO THE INVENTION

In the first aspect of the present invention, there is provided a welding method for heat-melting at least one surface to be welded of a continuous strip member and welding the surface to at least one continuous film made of plastic while feeding the strip member in a longitudinal direction of the strip member. The welding method includes: heating the surface with at least one heat source while feeding the strip member in the longitudinal direction; after the surface is heated with the heat source, irradiating the surface with at least one laser beam to further heat the surface with the laser beam while feeding the strip member in the longitudinal direction; and when or after the surface is further heated with the laser beam, pressurizing the strip member and the film to weld the surface to the film while feeding the strip member and the film in a state in which the strip member and the film are superposed on each other.

The welding method may include pressurizing the strip member and the film to weld the surface to the film when the surface is further heated with the laser beam.

The heat source may include an infrared light source for radiating infrared light of multiwavelength. The infrared light source may extend along a feed path for the strip member.

The welding method may include irradiating the surface with the infrared light to heat the surface with the infrared light. The welding method may include irradiating the surface with the infrared light from a side of the surface or from an opposite side of the surface. The welding method may include irradiating the surface with the infrared light through the film superposed on the strip member.

The strip member and the film may be fed in a state of being superposed on each other, when the surface is heated by the heat source.

The strip member may include: a base part having the surface; and a fitting part protruding from the base part on an opposite side of the surface. The welding method may further include: adjusting temperature of a guide in a range of 40°C to 100°C, the guide having a guide gap extending along a feed path for the strip member; and receiving the fitting part in the guide gap to suppress the strip member from moving in a width direction of the strip member, when the surface is heated with the heat source.

The welding method may include applying tension to the strip member and the film from downstream of a convex curved surface to cause the strip member and the film to be engaged with and pressed against the curved surface, thereby pressurizing the strip member and the film on the curved surface to weld the surface to the film.

The strip member may have a first surface and a second surface as the surface to be welded. A first film and a second film may be used as the film. A first heat source and a second heat source may be used as the heat source. A first laser beam and a second laser beam may be used as the laser beam. The welding method may include: heating the first surface with the first heat source and heating the second surface with the second heat source, while feeding the strip member in the longitudinal direction; after the first and second surfaces are heated with the first and second heat sources, irradiating the first surface with the first laser beam to heat the first surface with the first laser beam and irradiating the second surface with the second laser beam to heat the second surface with the second laser while feeding the strip member in the longitudinal direction; and when or after the first and second surfaces are further heated with the first and second laser beams, pressurizing the strip member and the first and second films to weld the first surface to the first film and to weld the second surface to the second film, while feeding the strip member and the first and second films in a state in which the strip member is sandwiched between the first and second films.

In the second aspect of the present invention, there is provided a welding device for heat-melting at least one surface to be welded of a continuous strip member and welding the surface to at least one continuous film made of plastic while feeding the strip member in a longitudinal direction of the strip member. The welding device includes: a heat device including at least one infrared light source disposed to extend along a feed path for the strip member and to radiate infrared light, the heat device being configured to irradiate the surface of the strip member being fed in the longitudinal direction with the infrared light to heat the surface with the infrared light; a pressure device configured to pressurize the strip member and the film being fed in the longitudinal direction in a state in which the strip member and the film are superposed on each other, to weld to the film the surface heated by the heat device.

The infrared light source may radiate infrared light of multiwavelength. The infrared light source may include a halogen lamp, a Kanthal (trademark) heater, a ceramic heater, or an infrared LED.

The welding device may further include a laser device including at least one laser source for radiating a laser beam. The laser device may be configured to irradiate the surface of the strip member being fed in the longitudinal direction with the laser beam, to further heat and thereby melt with the laser beam the surface heated by the heat device.

The strip member may include: a base part having the surface; and a fitting part protruding from the base part on an opposite side of the surface. The heat device may further include: a guide having a guide gap extending along a feed path for the strip member to receive the fitting part therein, when the surface is heated with the infrared light; and an adjusting device configured to adjust temperature of the guide in a range of 40° to 100°.

The strip member may have a first surface and a second surface as the surface to be welded. The heat device may include a first infrared light source and a second infrared light source as the infrared light source. The first and second infrared light sources may be disposed to be opposed to each other with a feed path for the strip member interposed therebetween. The heat device may be configured to heat the first surface with the first infrared light source and to heat the second surface with the second infrared light source.

The pressure device may include: an engaging member having a convex curved surface; and a tension applying mechanism configured to apply tension to the strip member and the film from downstream of the curved surface to cause the strip member and the film to be engaged with and pressed against the curved surface. A downstream part of the infrared light source may be opposed to the curved surface.

### BRIEF DESCRIPTION OF DRAWINGS

FIG. 1 schematically illustrates a welding device according to an implementation of the present invention.
FIG. 2 illustrates a cross section of a heat device of FIG. 1 perpendicular to a feed direction of a strip member.
FIG. 3A illustrates a cross section of an example of the strip member, FIG. 3B illustrates a cross section of another example of the strip member, and FIG. 3C illustrates the relation between a beam shape of a laser beam and a surface to be welded of the strip member.
FIG. 4 schematically illustrates a welding device according to another implementation of the present invention.
FIG. 5 illustrates a cross section of a heat device of FIG. 4 perpendicular to the feed direction of the strip member.
FIG. 6A illustrates a cross section of another example of the strip member, and FIG. 6B illustrates a cross section of yet another example of the strip member.
FIG. 7A schematically illustrates a welding device according to another implementation of the present invention, and FIG. 7B partially illustrates the welding device.
FIG. 8 illustrates a cross section of a heat device of FIG. 7A perpendicular to the feed direction of the strip member.
FIGs. 9A and 9B partially and schematically illustrate a welding device according to another implementation of the present invention.
FIGs. 10A and 10B illustrate a partial cross section of a heat device according to another implementation of the present invention perpendicular to the feed direction of the strip member.

### DESCRIPTION OF EMBODIMENTS

Hereinafter, a welding method and a welding device according to implementations of the present invention will be described with reference to accompanying drawings. In each implementation, explanation of same or similar components is omitted as much as possible.

### [First Implementation]

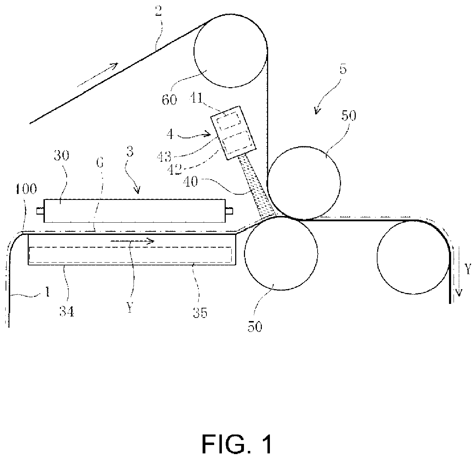

As illustrated in FIG. 1, a welding device is incorporated in an apparatus for making plastic bags. The apparatus makes the plastic bags at least from a continuous strip member 1 having a surface 100 to be welded as well as a continuous film 2 made of plastic.

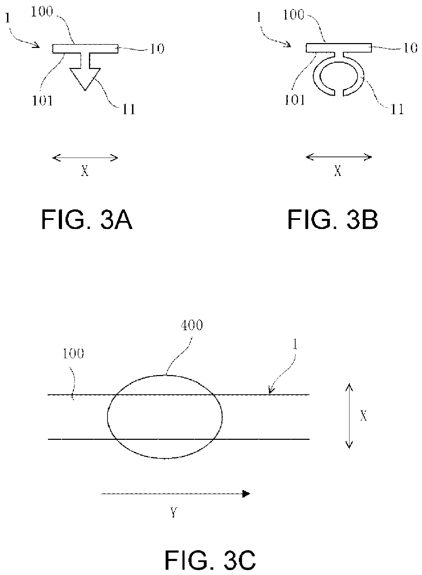

The strip member 1 is a continuous strip with the surface 100 to be welded which is weldable to the film 2 and has a width narrower than a width of the film 2. In this implementation, the strip member 1 is a male plastic member of a zipper as illustrated in FIG. 3A or a female plastic member of the zipper as illustrated in FIG. 3B. The strip member 1 of the implementation, therefore, includes a base part 10 and a fitting part 11. The base part 10 has the flat surface 100 to be welded and a flat opposite surface 101 located on the opposite side of the surface 100. The fitting part 11 protrudes from the opposite surface 101. The fitting part 11 of the male member in FIG. 3A and the fitting part 11 of the female member in FIG. 3B can be detachably fitted to each other.

The apparatus of FIG. 1 for making plastic bags includes a feeding mechanism (not shown). The feeding mechanism includes, for example, feed rollers. The strip member 1 is fed by the feeding mechanism in the longitudinal direction (continuous direction) thereof. A reference sign "Y" designates the feed direction of the strip member 1. The film 2 is also fed by the feeding mechanism in the longitudinal direction (continuous direction) thereof. The welding device heat-melts the surface 100 of the strip member 1 being fed in the longitudinal direction thereof, and then welds the surface 100 to the film 2.

The welding device includes a heat device 3. The heat device 3 includes, as a heat source for heating the surface 100, an infrared light source 30 for radiating infrared light. The heat device 3 is configured to heat, with the infrared light source 30, the surface 100 of the strip member 1 being fed in the longitudinal direction thereof.

The infrared light source 30 is disposed to extend along a feed path G (FIG. 1) for the strip member 1. The infrared light source 30 radiates not infrared light of single-wavelength such as a laser beam but infrared light of multiwavelength (having a wide wavelength range). The infrared light source 30 is a halogen lamp, a Kanthal (trademark) heater, a ceramic heater, an infrared LED or the like.

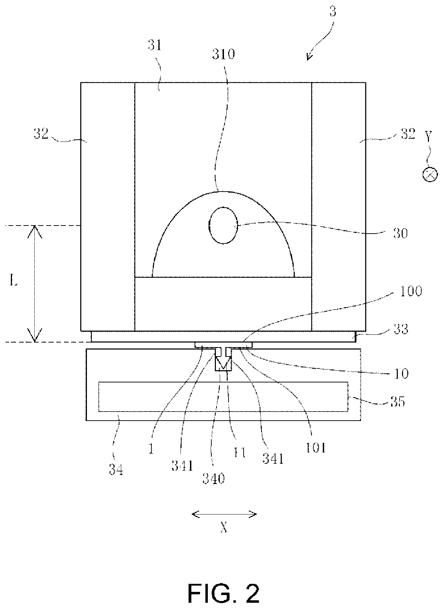

FIG. 2 schematically illustrates a cross section of the heat device 3 perpendicular to the feed direction Y of the strip member 1. As illustrated in FIG. 2, the heat device 3 further includes a light concentrating block 31 (omitted in FIG. 1) having a light concentrating surface 310. The light concentrating block 31 is supported by a pair of supports 32. The light concentrating surface 310 is formed as a concave curved surface and extends along the feed path G (FIG. 1). The infrared light source 30 is disposed in the space surrounded by the light concentrating surface 310. The heat device 3 further includes a transmission plate 33 which is supported by the supports 32 and made of material transparent to infrared light used.

Infrared light radiates from the infrared light source 30, is reflected by the light concentrating surface 310, passes through the transmission plate 33, and is concentrated at the position apart from the infrared light source 30 by distance L. This means that the heat energy is the strongest at the position apart from the infrared light source 30 by the distance L. The heat device 3 is configured such that the surface 100 to be welded is opposed to the infrared light source 30 apart from the infrared light source 30 by the distance L while the strip member 1 is fed in the longitudinal direction (that is, the feed direction Y) thereof though the heat device 3. Thereby, the heat device 3 irradiates, with infrared light, the surface 100 of the strip member 1 being fed, so as to heat the surface 100 with infrared light. In the implementation, the strip member 1 includes an infrared absorbing layer (which absorbs infrared light used) in a surface layer on the side of the surface 100.

The heat device 3 further includes a guide 34 with a guide gap 340 extending along the feed path G. The guide 34 is disposed to be opposed to the infrared light source 30. The strip member 1 is fed through a space between the infrared light source 30 and the guide 34. During this, the fitting part 11 of the strip member 1 is received in the guide gap 340 and sandwiched between the opposing surfaces 341 of the guide gap 340. Receiving the fitting part 11 in the guide gap 340 can suppress the strip member 1 from rattling in the width direction X thereof.

The heat device 3 further includes an adjusting device 35 configured to adjust the temperature of the guide 34. The adjusting device 35 incudes, for example, a heater. The adjusting device 35 is configured to adjust the temperature of the guide 34 in the range of 40°C to 100°C.

As illustrated in FIG. 1, the welding device further includes a laser device 4. The laser device 4 is configured to spot-irradiate the surface 100 of the strip member 1 being fed, with a laser beam 40, at a position downstream of the heat device 3, so as to further heat and thereby melt the surface 100 (which has been heated by the heat device 3) with the laser beam 40. The laser device 4 includes a laser source 41 and an optical system 42, for example, same as those in Patent document 1. These are housed in a housing 43. The laser source 41 is configured to radiate the laser beam 40. In the implementation, the laser beam 40 is infrared light. The optical system 41 is configured to form the laser beam 40 having a desired spot diameter.

As illustrated in FIG. 3C, a beam shape 400 at the irradiation position may be elliptic. It also may be circular. The laser beam 40 may radiate such that its beam shape 400 covers the whole width of the surface 100, which ensures that the surface 100 is welded over the entire width direction X thereof.

As illustrated in FIG. 1, the welding device further includes a pressure device 5. The pressure device 5 is configured to pressurize the strip member 1 and the film 2 being fed in the feed direction Y in the state of being superposed on each other.

The pressure device 5 includes a pair of pressure rollers 50 and 50 opposed to each other and disposed downstream of the irradiation position of the laser beam 40. The film 2 is guided by a guide roller 60 to and through the pressure rollers 50 and 50. The strip member 1 is also guided through the pressure rollers 50 and 50. This causes the strip member 1 and the film 2 to be superposed on each other such that the surface 100 contacts the film 2. The strip member 1 and the film 2 are fed in the feed direction Y through the pair of the pressure rollers 50 and 50 in a state of being superposed on each other. During this, the strip member 1 and the film 2 are pressurized by the pair of the pressure rollers 50 and 50.

A welding method for welding the surface 100 of the strip member 1 to the film 2 using the welding device will be described. While the strip member 1 is fed in the longitudinal direction thereof through the heat device 3, the surface 100 is heated with the infrared light source 30, which serves as the heat source. In other words, the surface 100 of the strip member 1 being fed is irradiated with infrared light to be heated with infrared light.

As illustrated in FIG. 2, when the surface 100 of the strip member 1 is heated with the infrared light source 30, the fitting part 11 is received in the guide gap 340 of the guide 34, so that the strip member 1 is suppressed from moving in the width direction X thereof. During this, the guide 34 is adjusted to an appropriate temperature in the range of 40 ° to 100 ° by the adjusting device 35.

Subsequently, the surface 100 is irradiated with the laser beam 40 by the laser device 4 at the position downstream of the heat device 3 while the strip member 1 is fed in the longitudinal direction thereof. The surface 100 that has been heated with the infrared light source 30 is further heated and thereby melted with the laser beam 40.

After the surface 100 has been heated with the laser beam 40, the strip member 1 and the film 2 are superposed on each other, and then fed to the pressure device 5. The strip member 1 and the film 2 are pressurized by the pressure device 5 (that is, the pair of the pressure rollers 50 and 50) while they are fed in the state of being superposed on each other. As a result, the melted surface 100 is welded to the film 2.

As described above, the surface 100 is preheated by the heat device 3 before it is heated with the laser beam 40. Therefore, stable welding of the strip member 1 (the surface 100) to the film 2 is ensured even when the strip member 1 is fed at high speed. As a result, the speed of making plastic bags can also be improved.

The infrared light source 30 as the heat source is disposed to extend along the feed path G. Sufficient time for preheating can, therefore, be ensured even when the strip member 1 is fed at high speed. Welding of the strip member 1 to the film 2 is further stabilized.

The preheating step ensures a sufficient melting state of the surface 100. Therefore, stable welding is ensured even if pressurizing force is weak when the pressure device 5 pressurizes the strip member 1 and the film 2.

The energy of the laser beam 40 is instantly absorbed into the infrared absorbing layer (surface layer) on the side of the surface 100, and accumulated, causing the instantaneous heat generation in only the surface layer. The heat energy transmits from the surface layer in the depth direction of the strip member 1 over time. The higher the feed speed of the strip member 1 is, the more the heat energy (which transmits in the depth direction of the strip member 1 until the strip member 1 and the film 2 are pressurized) is limited. Therefore, the energy accumulated in the surface layer only using the spot irradiation of the laser beam 40 can be insufficient for welding, resulting in defective welding. On the other hand, in the implementation, the surface 10 is preheated by the heat device 3 for sufficient time before the spot irradiation of the laser beam 40, so that the heat energy is sufficiently transmitted in the depth direction of the strip member 1. It is, therefore, possible to avoid defective welding.

The guide 34 suppresses the strip member 1 from moving in the width direction X thereof, thereby preventing the infrared light source 30 and the surface 100 from relatively and greatly shifting to each other in the width direction X. However, it is unavoidable for the strip member 1 to slightly rattle in the width direction X during feed, since plays are required between the fitting part 11 and the side walls 341 of the guide gap 340. In a method of welding the surface 100 only using the spot irradiation of the laser beam 40, defective welding can easily occur even when the strip member 1 slightly rattles relative to the laser beam 40. On the other hand, in the implementation, the strip member 1 is preheated uniformly for sufficient time due to heating with infrared light and heat conduction. Thus, defective welding is prevented when the strip member 1 slightly rattles.

As described above, the preheating step using the heat device 3 solves the problem which occurs when the surface 100 is welded only using the spot irradiation of the laser beam 40.

The guide 34 is adjusted to the appropriate temperature. It is, therefore, possible to preheat the surface 100 more efficiently.

The infrared light source 30 which radiates infrared light of multiwavelength is used. Such infrared light source 30 can be freely customized in shape and size. Information on a laser source tends to be business secret, whereas information on such an infrared light source 30 is already known. A user can, therefore, freely customize the infrared light 30 and its optical system and easily set desired irradiation density and heat time. These also ensures stable welding of the strip member 1 to the film 2.

It is preferable that infrared absorption treatment is applied to part or whole of the surface 100 whereas it is not applied to whole of the fitting part 11. The reason for this is that deformation of the fitting part 11 due to absorption of infrared light can cause poor fit of the fitting part 11. Such treatment enables the surface 100 to absorb infrared light efficiently and avoids the risk that the fitting part 11 deforms due to overheating.

Even in the case where the fitting part 11 does not absorb infrared light, it is unavoidable for the fitting part 11 to be heated due to heat conduction, since the surface 100 is heated by the heat device 3 for a long time. However, it is possible to dissipate heat from the fitting part 11 to the guide 34 and thereby prevent overheating of the fitting part 11, since the guide 34 is adjusted to the appropriate temperature.

### [Second Implementation]

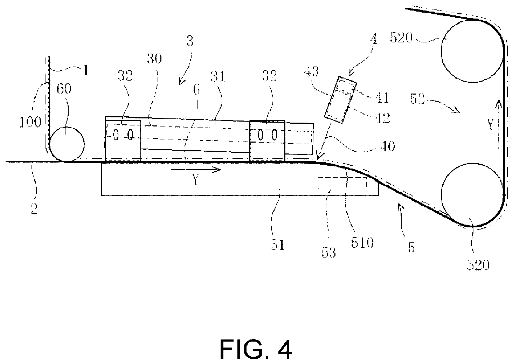

As illustrated in FIG. 4, in this implementation, the guide roller 60 is disposed upstream of the heat device 3. The strip member 1 is guided by the guide roller 60 to be superposed on the film 2 such that its surface 100 to be welded contacts the film 2. Thus, the strip member 1 and the film 2 are fed through the heat device 3 in the state of being superposed on each other.

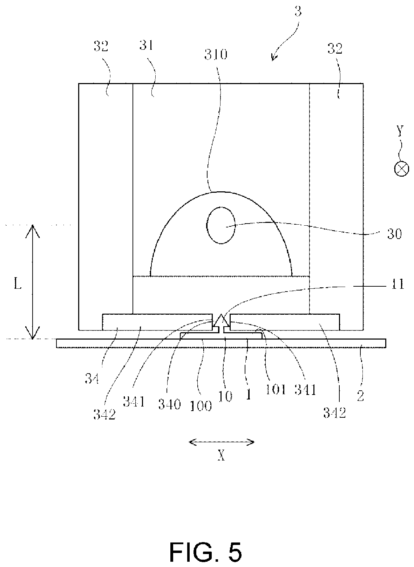

FIG. 5 illustrates the cross section of the heat device 3 perpendicular to the feed direction Y. As illustrated in FIG. 5, the fitting part 11 is opposed to the infrared light source 30 while the strip member 1 is fed through the heat device 3. The surface 100 is, therefore, irradiated with infrared light from the opposite side of the surface 100 through the strip member 1. The infrared absorption layer is provided on the side of the surface 100 of the strip member 1, and the absorption layer is heated by absorbing infrared light. The guide 34 is supported by the supports 32 and is made of material transparent to infrared light used. Infrared light radiates toward the surface 100 through the guide 34. The guide 34 includes the pair of the guide member 342 and 342 opposed to each other and defining the guide gap 340 therebetween.

The heat device 3 is configured such that the heat energy of the infrared light source 30 to the surface 100 gradually increases in the feed direction Y of the strip member 1 toward the irradiation position of the laser beam 40. Specifically, the heat device 3 is (the infrared light source 30 and the light concentrating block 31 are) arranged in an inclined manner such that the distance between the surface 100 and the infrared light source 30 approaches closest to the distance L (FIG. 5) at the downstream end of the heat device 3 (the infrared light source 30) so as to heat the surface 100 most strongly at the downstream end.

As illustrated in FIG. 4, the pressure device 5 includes an engaging member 51 and a tension applying mechanism 52 instead of the pair of the pressure rollers 50 and 50 (Fig .1).

The engaging member 51 has a convex curved surface 510. The curved surface 510 is formed on the downstream part of the engaging member 51. The curved surface 510 is positioned downstream of the heat device 3. The relative position of the curved surface 510 to the heat device 3 may be adjusted such that the upstream part of the curved surface 510 is heated by the heat device 3.

The tension applying mechanism 52 is configured to apply tension to the strip member 1 and the film 2 from downstream of the curved surface 510 to cause the strip member 1 and the film 2 to be engaged with and pressed against the curved surface 510.

In this implementation, the tension applying mechanism 52 incudes guide rollers 520 and 520 disposed downstream of the engaging member 51 to guide the strip member 1 and the film 2. The mechanism 52 further includes a guide mechanism (not shown). The position of the rollers 520 and 520 can be adjusted with the guide mechanism. The feed direction Y of the strip member 1 has been adjusted by means of positioning of the guide rollers 520 and 520 in such a manner that the strip member 1 and the film 2 are pressed against the curved surface 510.

It is preferable that the curved surface 510 is formed from material having a low coefficient of dynamic friction against the strip member 1 or the film 2. It is also preferable that surface treatment such as mirror finish or Teflon (trademark) coating (polytetrafluoroethylene, PTFE coating) is applied to the curved surface 510 to reduce the dynamic frictional force between the strip member 1/the film 2 and the curved surface 510. The temperature of the curved surface 510 may be adjusted by an adjustment device 53 (FIG. 4), such as a heater, built in the engaging member 51. These enable more efficient welding.

The position of the device 4 can be adjusted by a guide mechanism (not shown). Positioning the laser device 4 enables setting the irradiation position of the laser beam 40 to the pressure position of the pressure device 5. Thereby, the laser device 4 is capable of irradiating, with infrared light, a position where pressing force is appropriate. In this implementation, the laser device 4 has been positioned to irradiate the surface 100 with infrared light through the base part 10 of the strip member 1 on the upstream part of the curved surface 510.

A welding method of the implementation will be described. At a position upstream of the heat device 3, the strip member 1 is superposed on the film 2 such that its surface 100 to be welded contacts the film 2.

Subsequently, while the strip member 1 and the film 2 are fed through the heat device 3 in the state of being superposed on each other, the surface 100 is heated with the infrared light source 30. In other words, the surface 100 is irradiated with infrared light through the base part 10 of the strip member 1 to be heated with infrared light. During this, the fitting part 11 is received in the guide gap 340 to suppress the strip member 1 from moving in the width direction X thereof.

While the strip member 1 and the film 2 are fed in the state of being superposed on each other, the surface 100 that has been heated by the heat device 3 (infrared light source 30) is irradiated with the laser beam 40 on the curved surface 510 to be further heated and thereby melted with the laser beam 40.

When the surface 100 is heated with the laser beam 40, the strip member 1 and the film 2 are pressurized by the pressure device 5. In other words, tension is applied by the tension applying mechanism to the strip member 1 and the film 2 being fed, to cause the strip member 1 and the film 2 to be engaged with and pressed against the curved surface 510, thereby pressurizing the strip member 1 and the film 2 on the curved surface 510. As a result, the surface 100 is welded to the film 2 on the curved surface 510.

In this implementation, the preheating step also enables stable welding of the strip member 1 to the film 2 as in the first implementation.

Since the pressure device 5 pressurizes the strip member 1 and the film 2 without using the pair of the rollers 50 and 50, the laser device 4 can be relatively freely disposed. For example, the laser device 40 can be disposed to irradiate the surface 100 with the laser beam 40 at the right angle (that is, without defocus) on the curved surface 510. It is, therefore, possible to transmit the energy to the surface 100 efficiently. In the first implementation, the surface 100 is heat-melted with the laser beam 40 before the strip member 1 and the film 2 are pressurized. On the other hand, in the second implementation, the surface 100 is heat-melted with the laser beam 40 when the strip member 1 and the film 2 are pressurized. It is possible to set the irradiation position of the laser beam 40 to the pressure position where the pressure device 5 pressurizes the strip member 1 and the film 2. The welding method of the implementation enables performing both heating the surface 100 with the laser beam 40 and pressurizing the strip member 1 and the film 2 with the pressure device 5 simultaneously at the same position.

In the first implementation, there is the possibility that the melted surface 100 returns to the solid state in the section from the irradiation position of the laser beam 40 to the pressure position of the rollers 50 and 50 if feeding of the strip member 1 and the film 2 is temporally stopped on account of the apparatus for making plastic bags. For that reason, after feeding the strip member 1 and the film 2 has restarted, the surface 100 which has been cooled in the section can fail to be welded to the film 2 even if they are pressurized. On the other hand, the second implementation solves this problem since the second implementation performs heating and pressurizing simultaneously.

The second implementation performs heating with the laser device 4 and pressurizing with the pressure device 5 simultaneously, immediately after preheating with the heat device 3. The first implementation has a possibility of dissipating heat from the zipper 1 in the section from the downstream end of the heat device 3 to the irradiation position of the laser beam 40, whereas the second implementation solves this problem.

Since the heat device 3 is inclined appropriately, the heat device 3 can heat the surface 100 gradually and uniformly in a long section, thereby improving quality of welding.

### [Third implementation]

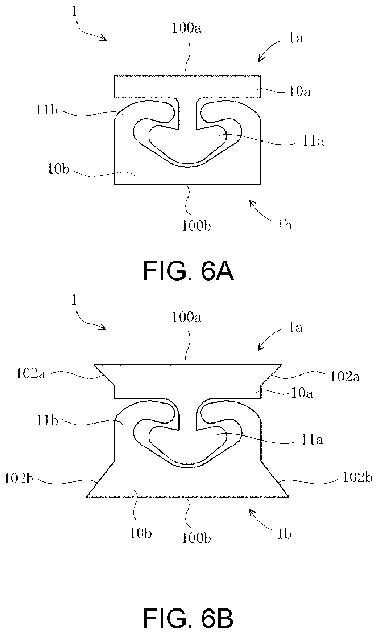

FIG. 6A illustrates the strip member 1 used in this implementation. The strip member 1 is a zipper which includes a male member 1a and a female member 1b detachably fitted to each other. The strip member 1 is fed in the longitudinal direction thereof in a state in which the male member 1a and the female member 1b are fitted to each other.

As illustrated in FIG. 6A, the male member 1a includes a first base part 10a having a first surface 100a to be welded, and a first fitting part 11a protruding from the first base part 10a on the opposite side of the first surface 100a. The female member 1b includes a second base part 10b having a second surface 100b to be welded, and a second fitting part 11b protruding from the second base part 10b on the opposite side of the second surface 100a. As in the other implementations, the strip member 1 may include the infrared absorption layers in the surface layers of the surface 100a and 100b, or the infrared absorption treatment may be applied to part or whole of the surfaces 100a and 100b.

Since the strip member 1 of the implementation is fed in the state in which the male member 1a and the female member 1b are fitted to each other, the strip member 1 is likely to tilt. In order to prevent this, the male member 1a and the female member 1b are preferably thick as illustrated in FIG. 6A. Furthermore, in order to prevent this, the male member 1a and the female member 1b may have inclined surfaces 102a and 102b so as to become wider toward the surfaces 100a and 100b as illustrated in FIG. 6B.

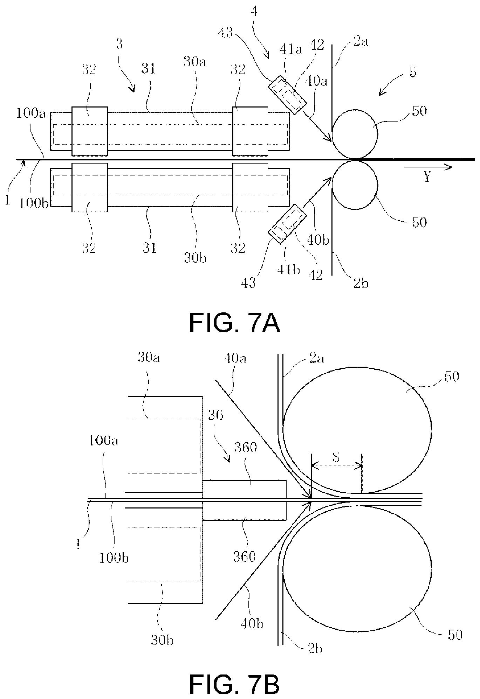

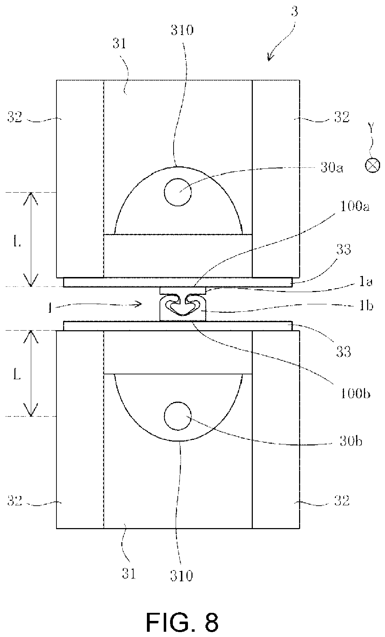

As illustrated in FIG. 7A, the heat device 3 includes a first infrared light source 30a as a first heat source and a second infrared light source 30b as a second heat source. The first and second infrared light sources 30a and 30b are the same as the infrared light source 30 of the above implementations. The first and second infrared light sources 30a and 30b are disposed to be opposed to each other with the feed path for the strip member 1 interposed therebetween. Therefore, the strip member 1 is fed though a space between the first and second infrared light sources 30a and 30b. As illustrated in FIG. 8, the light concentrating block 31, the supports 32, and the transmission plate 33 are provided for each of the first and second infrared light sources 30a and 30b as in the other implementations.

As illustrated in FIG. 7A, the laser device 4 includes a first laser source 41a for radiating a first laser beam 40a and a second laser source 41b for radiating a second laser beam 40b. These are the same as the laser source 40 of the above implementations. The optical system 42 and the housing 43 are provided for each of the first and second laser sources 41a and 41b.

As illustrated in FIG. 7B, the first surface 100a is irradiated with the first laser beam 40a at a position downstream of the heat device 3. The second surface 100b is irradiated with the second laser beam 40b at a position downstream of the heat device 3. The surfaces 100a and 100b are irradiated with the first and second laser beams 40a and 40b from both sides of the strip member 1 at an angle such that the section S between their irradiation positions and the pressure position of the pressing device 5 becomes as short as possible.

The pressure device 5, as in the first implementation, includes a pair of pressure rollers 50 and 50 disposed downstream of the irradiation positions of the first and second laser beams 40a and 40b.

A welding method of the implementation will be described. The strip member (zipper) 1 is fed in the longitudinal direction thereof through the heat device 3 in a state in which the male member 1a and the female member 1b are fitted to each other. During this, the first surface 100a is irradiated with infrared light from the first infrared light source 30a to be heated with infrared light. At the same time, the second surface 100b is irradiated with infrared light from the infrared light source 30b to be heated with infrared light. As illustrated in FIG. 8, the strip member 1 is heated and fed in a state of being sandwiched between the two transmission plates 33 and 33.

Subsequently, while the strip member 1 is fed in the longitudinal direction thereof, the first surface 100a is irradiated with the first laser beam 40a to be further heated and thereby melted with the first laser beam 40b. At the same time, the second surface 100b is irradiated with the second laser beam 40b to be further heated and thereby melted with the second laser beam 40b.

After the first and second surfaces 100a and 100b have been heated with the first and second laser beams 40a and 40b, they are fed between the pair of pressure rollers 50 and 50. The first and second films 2a and 2b are engaged with the pressure rollers 50 and 50 to be guided though the pressure rollers 50 and 50. The strip member 1, and the first and second films 2a and 2b are superposed on each other such that the strip member 1 is sandwiched between the first and second films 2a and 2b. At this time, the first surface 100a contacts the first film 2a, and the second surface 100b contacts the second film 2b.

The strip member 1 and the first and second films 2a and 2b are pressurized by the pressure device 5 (the pair of the pressure rollers 50 and 50) while being fed in a state of being superposed on each other. Thereby, the first surface 100a is welded to the first film 2a, and the second surface 100b is welded to the second film 2b.

As described above, the third implementation welds the strip member 1 having the first and second surfaces 100a and 100b to the first and second films 2a and 2b simultaneously. As in the other implementations, the preheating step ensures melting of the surfaces 100a and 100b. This, therefore, ensures stable welding of the strip member 1 to the first and second films 2a and 2b.

The strip member 1 and the first and second films 2a and 2b may be superposed on each other at a position not downstream of the heat device 3 but upstream of the heat device 3, and fed in this state through the heat device 3. In the heat device 3 of this case, the first surface 100a is irradiated with infrared light from the first infrared light source 30a through the first film 2a, and the second surface 100b is also irradiated with infrared light from the second infrared light source 30b through the second film 2b. Subsequently, at a position downstream of the heat device 3, the first surface 100a is irradiated with the first laser beam 40a through the first film 2a, and the second surface 100b is irradiated with the second laser beam 40b through the second film 2b. Therefore, the films 2a and 2b are used which are made of material transparent to infrared light of the infrared light sources 30a and 30b and the laser beams 40a and 40b.

### [Fourth Implementation]

The fourth implementation provides a welding device. It is clear from the above implementations that the welding device with the infrared light source(s) in the above implementations is suitable for implementing the above welding methods. However, a surface to be welded of the strip member can be melted by being heated only with the infrared light source(s). In other words, the welding device of the fourth implementation includes the heat device 3 and the pressure device 5 and does not include the laser device.

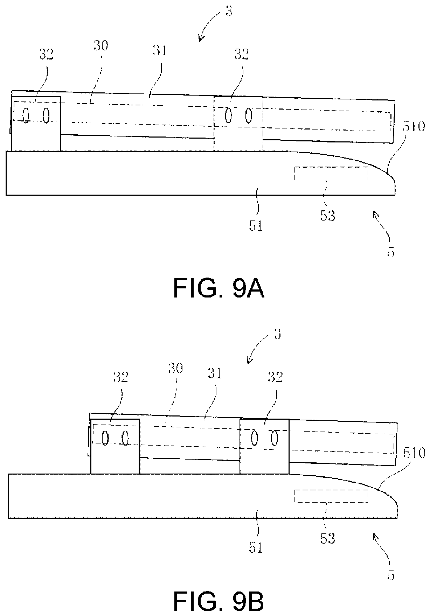

For example, as illustrated in FIG. 9A, the welding device of the fourth implementation may include the heat device 3 and the pressure device 5 same as those in the second implementation. While the strip member 1 and the film 2 are fed along together in the longitudinal direction thereof, the heat device 3 irradiates the surface 100 to be welded with infrared light from the infrared light source 30 to heat-melt the surface 100 only with infrared light. The pressure device 5 pressurizes the strip member 1 and the film 2 being fed in a state of being superposed on each other, to weld the surface 100 to the film 2. Thereby, the welding device of the fourth implementation provides stable welding of the strip member 1 to the film 2 without using any laser beams. Alternatively, the welding device may include the heat device 3 and the pressure device 5 same as those in the first or third implementation.

Although the preferred implementations according to the present invention are described, the present invention is not limited to the above implementations.

In the second implementation, the infrared light source 30 is disposed to irradiate the surface 100 with infrared light through the inside of the strip member 1. Instead, the infrared light source 30 may be disposed to irradiate the surface 100 with infrared light through the film 2 superposed on the strip member 1. In this case, the positions of the strip member 1 and the film 2 may be replaced with each other, and the arrangement of the guide 34 (FIG. 5) may be changed accordingly. In this case, the film 2 is used which is made of material transparent to infrared light of the infrared light source 30. Furthermore, the film 2 may be used which is made of material transparent to the laser beam 40, and the surface 100 may be irradiated with a laser beam 40 through the film 2 superposed on the strip member 1.

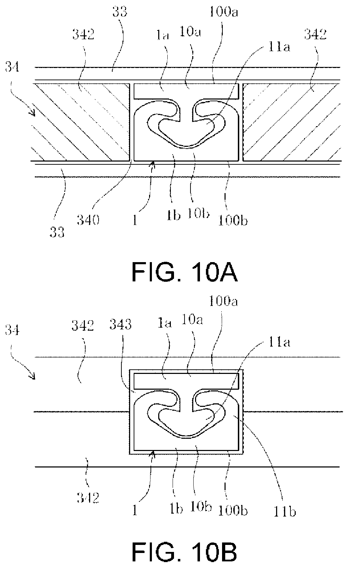

As illustrated in FIG. 10A, in the third implementation using the zipper (as the strip member 1) having the male member 1a and the female member 1b, the heat device 3 may include a guide 34 having a guide gap 340. The guide 34 includes a pair of guide members 342 and 342 disposed to be opposed to each other and to define a guide gap 340 therebetween. The strip member 1 is fed while being received in the guide gap 340 and being guided by the guide members 342 and 342 located on both sides of the strip member 1.

As illustrated in FIG. 10B, a guide 34 may be provided which is made of material transparent to infrared light used. The guide 34 has a guide hole 343 extending along the feed path for the strip member 1 to receive the strip member 1 (being fed) by entirely surrounding the circumference of the strip member 1. The guide 34 includes a pair of guide members 342 and 342 each having a guide gap. The guide hole 343 is defined by a combination of the two guide gaps. The strip member 1 is fed while being received in the guide hole 343 and being guided with its circumference entirely surrounded by the guide hole 343.

As shown in FIG. 7B, the heat device 3 of the third implementation may include a heat retention mechanism 36 configured to prevent the strip member 1 from cooling in the section from the downstream ends of the infrared light sources 30a and 30b to the irradiation positions of the laser beams 40a and 40b. The heat retention mechanism 36 includes, for example, a pair of heat retention members 360 and 360 extending along the feed path for the strip member 1 in the section from the downstream ends of the infrared light sources 30a and 30b to the irradiation positions of the laser beams 40a and 40b. The pair of the heat retention members 360 and 360 sandwiches the strip member 1 from the sides of the surfaces 100a and 100b to retain the temperature of the strip member 1 being fed. The heat retention mechanism 36 may have another configuration.

As in the second implementation, the heat device 3 of the third and fourth implementations may also be arranged in an inclined manner such that the distance between the surface 100 (100a, 100b) and the infrared light source 30 (30a, 30b) approaches the distance L (FIG. 5) gradually in the feed direction Y. As described above, this improves quality of welding.

As illustrated in FIG. 9A or FIG. 9B, the infrared light source 30 of the fourth implementation may be arranged such that the downstream portion thereof is opposed to the curved surface 510. Thereby, the welding device can irradiate the surface 100 with infrared light on the curved surface 510 to heat the surface 100 with infrared light also when pressurizing the strip member 1 and the film 2 on the curved surface 510.

The downstream part of the infrared light source 30 in the fourth implementation may be opposed to the curved surface 510 and have a shape corresponding to the curved surface 510 so as to make the distance between the infrared light source 30 and the curved surface 510 the constant distance L (FIG. 5). Thereby, it is possible to strongly heat the surface 100 with the heat device 3 on the curved surface 510 when the strip member 1 and the film 2 are pressurized on the curved surface 510.

Since the light concentrating block 31 is heated by the infrared light source 30, it is preferable in each of the implementations to cool the light concentrating block 31 using a cool device.

The arrangement of the heat device 3 is not limited to the ones described above in each of the implementations. The heat device 3 may be arranged to be shifted downstream or inclined appropriately, such that the heat energy to the surface 100 has the intended distribution along the feed direction Y of the strip member 1.

In each of the implementations, the strip member 1 is the male member of the zipper, the female member of the zipper, or the zipper. Instead, the strip member 1 may be a male member of a hook-and-loop fastener, a female member of the hook-and-loop fastener, the hook-and-loop fastener (which includes the male member and the female member engaged with each other), an adhesive tape, a seal tape, a tape-like reinforcing member, a tape-like decorative member, a tape-like header of a bag, and so on. It is preferable that the strip member provides a certain function to the plastic bag.

### DESCRIPTION OF REFERENCE NUMERALS

- 1: strip member
- 100, 100a, 100b: surface to be welded
- 2, 2a, 2b: film
- 3: heat device
- 30, 30a, 30b: infrared light source (example of heat source)
- 34: guide
- 340: guide gap
- 4: laser device
- 40, 40a, 40b: laser beam
- 41, 41a, 41b: laser source
- 5: pressure device
- 50: pressure roller
- 51: engaging member
- 510: curved surface
- 52: tension applying mechanism
- Y: feed direction (longitudinal direction) of the strip member
- X: width direction of the strip member
- G: feed path for the strip member

## Claims

1. A welding method for heat-melting at least one surface to be welded of a continuous strip member and welding the surface to at least one continuous film made of plastic while feeding the strip member in a longitudinal direction of the strip member, the welding method comprising:
heating the surface with at least one heat source while feeding the strip member in the longitudinal direction;
after the surface is heated with the heat source, irradiating the surface with at least one laser beam to further heat the surface with the laser beam while feeding the strip member in the longitudinal direction; and
when or after the surface is further heated with the laser beam, pressurizing the strip member and the film to weld the surface to the film while feeding the strip member and the film in a state in which the strip member and the film are superposed on each other.

2. The welding method according to claim 1, further comprising:
pressurizing the strip member and the film to weld the surface to the film when the surface is further heated with the laser beam.

3. The welding method according to claim 1, wherein
the heat source includes an infrared light source for radiating infrared light of multiwavelength,
the welding method comprising: irradiating the surface with the infrared light to heat the surface with the infrared light.

4. The welding method according to claim 3, wherein
the infrared light source extends along a feed path for the strip member.

5. The welding method according to claim 3, further comprising:
irradiating the surface with the infrared light from a side of the surface.

6. The welding method according to claim 3, further comprising:
irradiating the surface with the infrared light from an opposite side of the surface.

7. The welding method according to claim 3, further comprising:
irradiating the surface with the infrared light through the film superposed on the strip member.

8. The welding method according to claim 1, wherein
the strip member and the film are fed in a state of being superposed on each other, when the surface is heated with the heat source.

9. The welding method according to claim 1, wherein the strip member includes:
a base part, having the surface; and
a fitting part, protruding from the base part on an opposite side of the surface,
the welding method further comprising:
adjusting temperature of a guide in a range of 40°C to 100°C, the guide having a guide gap extending along a feed path for the strip member; and
receiving the fitting part in the guide gap to suppress the strip member from moving in a width direction of the strip member, when the surface is heated with the heat source.

10. The welding method according to claim 1, further comprising:
applying tension to the strip member and the film from downstream of a convex curved surface to cause the strip member and the film to be engaged with and pressed against the curved surface, thereby pressurizing the strip member and the film on the curved surface to weld the surface of the strip member to the film.

11. The welding method according to claim 1, wherein
the strip member has a first surface and a second surface as the surface to be welded, wherein a first film and a second film are used as the film,
wherein a first heat source and a second heat source are used as the heat source, and wherein a first laser beam and a second laser beam are used as the laser beam,
the welding method further comprising:
heating the first surface with the first heat source and heating the second surface with the second heat source, while feeding the strip member in the longitudinal direction;
after the first and second surfaces are heated with the first and second heat sources, irradiating the first surface with the first laser beam to heat the first surface with the first laser beam and irradiating the second surface with the second laser beam to heat the second surface with the second laser while feeding the strip member in the longitudinal direction; and
when or after the first and second surfaces are further heated with the first and second laser beams, pressurizing the strip member and the first and second films to weld the first surface to the first film and to weld the second surface to the second film, while feeding the strip member and the first and second films in a state in which the strip member is sandwiched between the first and second films.

12. A welding device for heat-melting at least one surface to be welded of a continuous strip member and welding the surface to at least one continuous film made of plastic while feeding the strip member in a longitudinal direction of the strip member, the welding device comprising:
a heat device, including at least one infrared light source disposed to extend along a feed path for the strip member and to radiate infrared light, the heat device being configured to irradiate the surface of the strip member being fed in the longitudinal direction with the infrared light to heat the surface with the infrared light; and
a pressure device, configured to pressurize the strip member and the film being fed in the longitudinal direction in a state in which the strip member and the film are superposed on each other, to weld to the film the surface heated by the heat device.

13. The welding device according to claim 12, wherein
the infrared light source radiates infrared light of multiwavelength.

14. The welding device according to claim 12, wherein
the infrared light source includes a halogen lamp, a Kanthal heater, a ceramic heater, or an infrared LED.

15. The welding device according to claim 12, further comprising:
a laser device, including at least one laser source for radiating a laser beam,
the laser device being configured to irradiate the surface of the strip member being fed in the longitudinal direction with the laser beam, to further heat and thereby melt with the laser beam the surface heated by the heat device.

16. The welding device according to claim 12, wherein the strip member includes:
a base part, having the surface; and
a fitting part, protruding from the base part on an opposite side of the surface, and
wherein the heat device further includes:
a guide, having a guide gap extending along a feed path for the strip member to receive the fitting part therein, when the surface is heated with the infrared light; and
an adjusting device, configured to adjust temperature of the guide in a range of 40° to 100°.

17. The welding device according to claim 12, wherein
the strip member has a first surface and a second surface as the surface to be welded,
the heat device includes a first infrared light source and a second infrared light source as the infrared light source,
the first and second infrared light sources being disposed to be opposed to each other with a feed path for the strip member interposed therebetween, and
the heat device is configured to heat the first surface with the first infrared light source and to heat the second surface with the second infrared light source.

18. The welding device according to claim 12, wherein the pressure device includes:
an engaging member, having a convex curved surface; and
a tension applying mechanism, configured to apply tension to the strip member and the film from downstream of the curved surface to cause the strip member and the film to be engaged with and pressed against the curved surface.

19. The welding device according to claim 18, wherein
a downstream part of the infrared light source is opposed to the curved surface.
